# EUROPÄISCHE PATENTSCHRIFT

(11) **EP 1 090 373 B1**
(45) Veröffentlichungstag und Bekanntmachung des Hinweises auf die Patenterteilung: **06.03.2002**
(21) Anmeldenummer: 99932729.9
(22) Anmeldetag: 24.06.1999
(51) Int. Cl.: G06K 19/077, G06K 19/06, G06K 19/18

(54) **KARTENFÖRMIGER DATENTRÄGER UND VERFAHREN ZU SEINER HERSTELLUNG**
CARD-SHAPED DATA CARRIER AND METHOD FOR PRODUCING THE SAME
SUPPORT DE DONNEES SOUS FORME DE CARTE, ET SON PROCEDE DE PRODUCTION

(30) Priorität: 10.09.1998 DE 19841431; 10.11.1998 DE 19851836
(43) Veröffentlichungstag der Anmeldung: 11.04.2001
(73) Patentinhaber: SkiData AG, 5083 Gartenau (AT)
(72) Erfinder: LIPPERT, Johannes, A-5360 St. Wolfgang (AT)
(74) Vertreter: Berngruber, Otto, Dr. Dipl.-Chem.
(86) Internationale Anmeldenummer: EP9904413
(87) Internationale Veröffentlichungsnummer: WO0016256

(56) Entgegenhaltungen:
- EP-A- 0 405 054
- EP-A- 0 733 994
- EP-A- 0 794 509
- WO-A-92/21105
- US-A- 5 719 850

## Beschreibung

Die Erfindung bezieht sich auf einen kartenförmigen Datenträger mit einer thermoreversiblen Schicht nach dem Oberbegriff des Anspruchs 1 und ein Verfahren zu seiner Herstellung.

Als Identifikations- und Berechtigungskarten werden immer häufiger Chipkarten verwendet, mit denen der Karteninhaber die unterschiedlichsten Einrichtungen in Anspruch nehmen kann, z.B. Transportmittel, wie Skiliftanlagen, Nahverkehrsmittel, Mietautos, Sportanlagen, Parkplätze, öffentliche Telefone usw. Auf dem Chip ist dabei meistens ein Guthaben gespeichert, von dem mit einem Schreib-Lese-Gerät bei Inanspruchnahme der Einrichtung beispielsweise beim Zutritt ein entsprechender Betrag abgebucht wird. Um das zur Verfügung stehende Kartenguthaben jederzeit sichtbar zu machen, ist es bekannt, einen Teilbereich der Karte mit einer thermoreversiblen Schicht zu versehen, auf die ein an das Schreib-Lese-Gerät angeschlossener Thermodruckkopf das jeweilige Kartenguthaben aufzeichnet. Die mit dem Thermodruckkopf auf die thermoreversible Schicht aufgezeichneten Daten sind dabei opak oder bei einer opaken Schicht transparent. Um sie besser sichtbar zu machen, ist die thermoreversible Schicht auf einer metallisch glänzenden oder dunklen Hintergrundschicht aufgebracht (vergleiche z.B. EP-A-0 405 054 und WO 96/11451).

Ferner ist eine Berechtigungskarte im Handel, die eine thermoreversible Farbschicht auf einer weißen Trägerfolie und eine Schutzschicht auf der thermoreversiblen Farbschicht aufweist. Die thermoreversible Schicht der bekannten Berechtigungskarte ist in sichtbarer, z. B. blauer Farbe mit dem Thermodruckkopf beschreibbar.

Identifikations- und Berechtigungskarten weisen zudem permanente Datenbilder auf, die beispielsweise des Logo das Kartenausstellers, Werbung und dergleichen. Dazu ist bei der bekannten Berechtigungskarte auf die thermoreversible Schicht bzw. deren Schutzschicht eine Druckschicht aufgebracht, die bis auf ein Feld zum thermoreversiblen Aufzeichnen den größten Teil der Karte bedeckt.

Aus US-A-5719850 ist ein kartenförmiges optisches Speichermedium bekannt, das eine optische Schicht zum Aufzeichnen und Ablesen von Daten und unter der optischen Schicht eine Druckschicht aufweist. In der Druckschicht ist ein Teilbereich als thermoreversible Schicht ausgebildet, um zum Beispiel die noch verbliebene Speicherkapazität der optischen Schicht sichtbar zu machen. Das thermoreversible Feld wird mit einem Lichtstrahl durch die optische Schicht hindurch beschrieben.

Chipkarten werden mehr und mehr als Multifunktionskarten eingesetzt. Das heißt, mit einer Karte soll eine Vielzahl verschiedener Berechtigungen in Anspruch genommen werden können. So kann z. B. ein und dieselbe Berechtigungskarte als Jahresskipass für ein Skigebiet und als Punktekarte für andere Skigebiete ausgebildet sein oder als Punktekarte für ein Skigebiet und Punktekarte für ein Hallenbad, und zugleich als zeitlich begrenzte Berechtigungskarte für ein Nahverkehrsmittel. Um die jeweiligen Guthaben, unterschiedlichen Gültigkeitszeiträume und dergleichen für die einzelnen Berechtigungen einer solchen Multifunktionskarte sichtbar auf die thermoreversible Schicht aufzeichnen zu können, muss eine entsprechend große Fläche dafür auf der Karte vorgesehen sein.

Aufgabe der Erfindung ist es daher, einen kartenförmigen Datenträger, insbesondere eine Identifikations- und/oder Berechtigungskarte, mit einer thermoreversiblen Schicht bereitzustellen, der, ohne die Fläche für die permanenten Daten und Bilder der Karte reduzieren oder die Karte vergrößern zu müssen, eine großflächige thermoreversible Aufzeichnung einer Vielzahl von Daten und/oder Bildern erlaubt.

Dies wird erfindungsgemäß mit dem im Anspruch 1 gekennzeichneten kartenförmigen Datenträger erreicht. In den Ansprüchen 2 bis 8 sind vorteilhafte Ausgestaltungen des erfindungsgemäßen Datenträgers wiedergegeben, während der Anspruch 9 ein bevorzugtes Verfahren zur Herstellung des erfindungsgemäßen Datenträgers beinhaltet, das durch die Maßnahmen der Ansprüche 10 und 11 in vorteilhafter Weise weiter ausgebildet wird.

Der erfindungsgemäße kartenförmige Datenträger weist eine Trägerschicht auf, auf die eine Druckschicht vorzugsweise vollflächig aufgetragen ist. Auf die Druckschicht ist vorzugsweise vollflächig eine thermoreversible Schicht aufgebracht, die als transparente Folie ausgebildet ist.

Die Trägerschicht kann aus einem thermoplastischen Kunststoff bestehen, wie er üblicherweise für Plastikkarten verwendet wird, z.B. PET (Polyethylenterephthalat) oder PVC (Polyvinylchlorid), Polyethylen oder dergleichen.

Die Druckschicht, die beispielsweise durch Siebdruck oder ein anderes Druckverfahren auf die Trägerschicht aufgebracht wird, weist die permanenten (nicht löschbaren) Daten und Bilder der Karte auf. Dabei kann es sich z.B. um das Logo des Kartenausstellers, Werbung oder bei einer Skikarte um eine Übersichtskarte des betreffenden Skigebiets handeln. Da, falls notwendig, die gesamte Kartenoberfläche zur Verfügung steht, kann die Karte mit einem Maximum an solchen permanent aufgebrachten Informationen versehen werden.

Die thermoreversible Schicht wird mit den löschbaren Daten und Bildern versehen. Die als transparenter Film ausgebildete thermoreversible Schicht des erfindungsgemäßen Datenträgers besteht vorzugsweise aus einer transparenten Trägerfolie mit einer darauf aufgebrachten thermoreversiblen Farbschicht und einer auf der thermoreversiblen Farbschicht aufgebrachten Schutzschicht. Die die thermoreversible Schicht bildende transparente Folie weist damit einen Aufbau auf, der, abgesehen von der Druckschicht, im wesentlichen dem Aufbau der eingangs beschriebenen Berechtigungskarte entspricht, abgesehen davon, dass die Trägerfolie transparent ausgebildet ist, während sie bei der eingangs beschriebenen Berechtigungskarte weiß ist.

Die transparente thermoreversible Folie kann z.B. eine Dicke von 10 bis 50 um aufweisen, und die Trägerfolie der transparenten thermoreversiblen Folie kann z.B. eine PET-Folie sein. Die sichtbare Farbe der thermoreversiblen Farbschicht, die beim Aufzeichnen mit dem Thermodruckkopf entsteht, kann, wie bei der eingangs beschriebenen bekannten Berechtigungskarte, eine blaue Farbe sein.

Das Beschreiben in sichtbarer Farbe und das Löschen der Daten und/oder Bilder auf der thermoreversiblen Folie kann in verschiedener Art und Weise erfolgen. So kann die thermoreversible Folie bzw. Schicht mit dem Thermokopf bei einer ersten Temperatur in sichtbarer Farbe mit Daten und/oder Bildern beschreibbar sein, wobei diese Daten und/oder Bilder bei einer zweiten höheren Temperatur durch Übergang in einen transparenten Zustand gelöscht werden. Die erste Temperatur, also die Temperatur, bei der die thermoreversible Farbschicht von transparent in sichtbar bzw. blau umschlägt, kann wie bei der beschriebenen bekannten Berechtigungskarte beispielsweise 70 bis 90° betragen, während die zweite Temperatur, bei der die sichtbare bzw. blaue Farbe zum Löschen der aufgezeichneten Daten und Bilder wieder in den transparenten Zustand übergeht, beispielsweise 100 bis 130°C betragen kann. Während das Aufzeichnen auf die thermoreversible Schicht mit dem Thermodruckkopf erfolgt, kann zum Löschen eine Löschleiste oder -walze vorgesehen sein.

Es ist jedoch nicht notwendig, dass zwei Temperaturen angewendet werden, nämlich eine zum Beschreiben sichtbarer Farbe und eine zweite höhere Temperatur zum Löschen. Vielmehr kann auch bei der gleichen Temperatur beschrieben und gelöscht werden, und zwar durch unterschiedliche Abkühlzeiten, nämlich schnelles Abkühlen zum Schreiben und langsames Abkühlen zum Löschen. Das heißt, wenn die thermoreversible Schicht schnell abgekühlt wird, tritt an der mit dem Thermodruckkopf erwärmten Stelle sichtbare Farbe auf, während beim langsamen Abkühlen nach dem Erwärmen mit dem Thermodruckkopf die thermoreversible Schicht in einen transparenten Zustand übergeht.

Der erfindungsgemäße Datenträger kann dabei auf einer oder beiden Seiten mit einer Trägerschicht mit einer Druckschicht und einer auf der Druckschicht aufgebrachten transparenten thermoreversiblen Folie versehen sein.

Die auf die thermoreversible Schicht aufgezeichneten Daten und Bilder können z.B. der Name des Karteninhabers oder dergleichen Personalisierungsdaten, ein Foto des Karteninhabers, die Gültigkeitsdauer der Karte, Daten über Punkte oder ein sonstiges Guthaben oder dergleichen sein.

Die permanenten Daten und Bilder, mit denen die Druckschicht des erfindungsgemäßen Datenträgers versehen ist und die auf die thermoreversible Schicht aufgezeichneten Daten und Bilder können so aufeinander abgestimmt sein, dass die Druckschicht in dem Bereich der mit dem Thermodruckkopf auf die thermoreversible Schicht aufgezeichneten Daten und Bilder einen dazu kontrastierenden Hintergrund bildet. Dies kann beispielsweise durch eine Aufhellung der Druckschicht in dem Bereich erfolgen, in dem auf die thermoreversible Schicht Daten und Bilder aufgezeichnet werden, also z.B. im Bereich der Druckschicht, wo das Foto des Karteninhabers auf der thermoreversiblen Schicht aufgezeichnet wird.

Die Druckschicht kann zudem im Bereich der thermoreversibel aufgezeichneten Daten und Bilder mit Sicherheitsmerkmalen versehen sein, beispielsweise mit Farbmustern oder -effekten, UV-reflektierenden Zeichen, Hologrammen und dergleichen, wie sie zur Fälschungssicherheit bei Banknoten und Wertpapieren verwendet werden, um unbefugte Manipulationen an der transparenten, thermoreversiblen Folie sichtbar zu machen.

Die transparente thermoreversible Folie des erfindungsgemäßen Datenträgers bildet zugleich einen hervorragenden mechanischen, thermischen und chemischen Schutz der Druckschicht sowie Schutz vor UV-Strahlung.

Der erfindungsgemäße Datenträger ist vorzugsweise mit einem Chip und/oder einem Magnetstreifen versehen, auf dem die auf die thermoreversible Schicht aufgezeichneten und weitere Daten gespeichert sind. Der Chip weist einen nicht flüchtigen, wiederbeschreibbaren Speicher auf. Der Datenträger kann dabei einen kontaktbehafteten und/oder einen kontaktlos arbeitenden Chip aufweisen, beispielsweise einen kontaktlosen Chip für Transportmittel, wie Skiliftanlagen oder Nahverkehrsmittel, und einen kontaktbehafteten Chip, beispielsweise zur Zugangsberechtigung zu einem Hotelzimmer. Die Berechtigungskarte kann eine Scheck-, Kredit- oder Telefonwertkarte sein oder eine Zugangsberechtigungskarte. Die Berechtigung kann eine persönliche Berechtigung, ereignisabhängig und/oder wertabhängig sein. Auch kann es sich um einen Personalausweis oder Führerschein z.B. mit begrenzter Gültigkeitsdauer handeln.

Damit kann z.B. eine Adressenänderung auf die thermoreversible Schicht aufgezeichnet werden, ohne einen neuen Ausweis anfertigen zu müssen.

Nachstehend ist eine Ausführungsform des erfindungsgemäßen Datenträgers anhand der Zeichnung beispielsweise näher erläutert. Darin zeigen:
- Fign. 1 und 2: eine Draufsicht bzw. eine Explosionsdarstellung des Datenträgers; und
- Fig. 3: einen Querschnitt durch die transparente thermoreversible Folie.

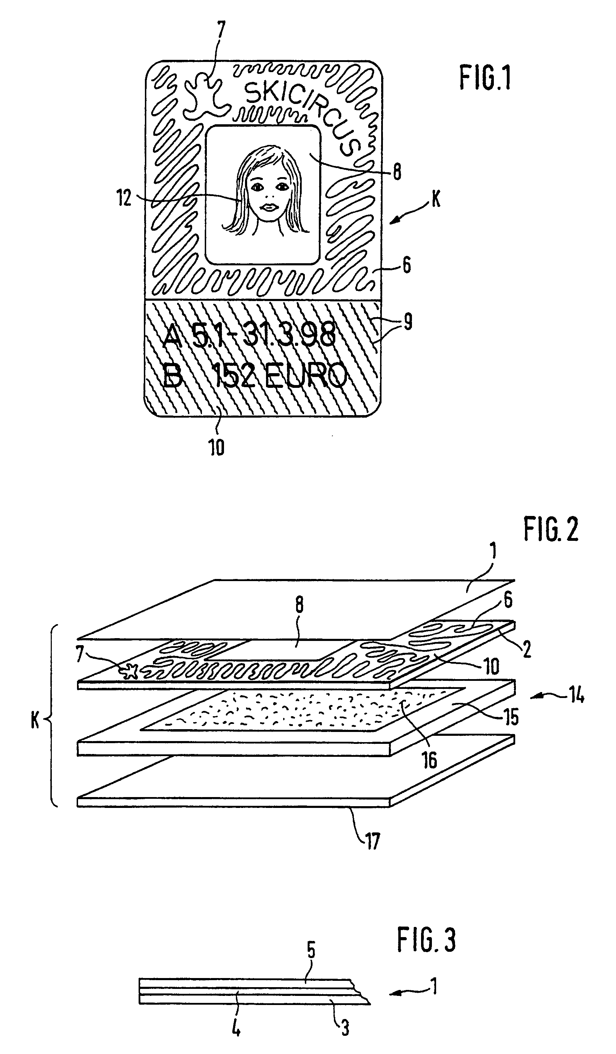

Gemäß Figur 2 besteht der Datenträger aus einer Karte K aus einer transparenten, thermoreversiblen Folie 1, die auf eine Träger- oder Deckschicht 2 aufgebracht ist.

Die transparente, thermoreversible Folie 1 besteht gemäß Figur 3 aus einer transparenten Trägerfolie 3, z.B. aus PET, einer thermoreversiblen Farbschicht 4 und einer Schutzschicht 5.

Die Träger- oder Deckschicht 2, die z.B. aus PET besteht, ist auf der der thermoreversiblen Folie 1 zugewandten Seite mit einer Druckschicht 6 versehen, die beispielsweise durch Siebdruck aufgebracht sein kann, und zwar z.B. mit dem Logo 7 des Kartenausstellers, wobei die Druckschicht 6 nach Figur 2 beispielsweise das Logo 7 des Kartenausstellers, einen aufgehellten Bereich 8 und einen weiteren hellen, mit einem Sicherheitsmuster 9 versehenen Bereich 10 aufweist.

Auf die thermoreversible Folie 1 ist gemäß Figur 1 im aufgehellten Bereich 8 der Druckschicht 6 ein Foto 12 des Karteninhabers mit einem Thermodruckkopf aufgezeichnet, und im Bereich 10 der Druckschicht 6 beispielsweise die Gültigkeitsdauer der Karte in einem Skigebiet A und das Guthaben in einem Selbstbedienungsrestaurant B.

Die Karte K ist als berührungslose Chipkarte ausgebildet. Dazu ist gemäß Figur 2 eine Innenschicht 14 mit einem Rahmen 15 vorgesehen, in dem in einer Kunststoffmasse 16 ein nicht dargestelltes Chipmodul mit Antennenspule eingebettet ist. Eine weitere Deckschicht 17 schließt die Karte K auf der anderen Seite ab. Die andere Deckschicht 17 kann ebenfalls mit einer Druckschicht versehen sein. Auch kann sie auf dieser Druckschicht eine weitere thermoreversible transparente Folie aufweisen.

Zur Herstellung der Karte nach Figur 2 wird in einem ersten Schritt die Träger- oder Deckschicht 2 mit der Druckschicht 6 versehen. Alsdann wird auf die mit der Druckschicht 6 versehene Träger- oder Deckschicht 2 die thermoreversible transparente Folie 1 heiß auflaminiert. In gleicher Weise kann die Deck- oder Trägerschicht 17 mit einer Druckschicht und anschließend durch Heißlaminieren mit einer thermoreversiblen transparenten Folie versehen werden. Alsdann werden die Träger- oder Deckschichten 2 und 17 mit der oder den auflaminierten thermoreversiblen Folien 1 mit der Innenschicht 14 durch Kaltlamination verbunden, und zwar durch entsprechende Ausbildung der Masse 16 der Innenschicht 14 als Klebemasse.

Statt auf der Trägerschicht 2 kann die Druckschicht auch auf der Unterseite der thermoreversiblen transparenten Folie aufgebracht sein, die dann auf die blanke Trägerschicht auflaminiert wird.

Ferner kann zwischen die thermoreversible transparente Folie und die Trägerschicht eine weitere Folie laminiert werden, die Sicherheitsmerkmale, z.B. ein Hologramm umfaßt.

## Patentansprüche

1. Kartenförmiger Datenträger mit einer thermoreversiblen Schicht, die mit einem Thermodruckkopf in sichtbarer Farbe mit Daten und/oder Bildern beschreibbar ist, die durch Übergang in einen transparenten Zustand löschbar sind, und mit einer Druckschicht mit permanenten Daten und/oder Bildern, **dadurch gekennzeichnet, dass** die Druckschicht (6) zwischen einer Trägerschicht (2) und der als transparente Folie (1) ausgebildeten thermoreversiblen Schicht aufgebracht ist.

2. Datenträger nach Anspruch 1, **dadurch gekennzeichnet, dass** die thermoreversible transparente Folie (1) eine thermoreversible Farbschicht (4) auf einer transparenten Trägerfolie (3) und eine Schutzschicht (5) auf der thermoreversiblen Farbschicht (4) aufweist.

3. Datenträger nach Anspruch 1 oder 2, **dadurch gekennzeichnet, dass** die Druckschicht (6) auf einer oder beiden Seiten der Karte (K) vollflächig aufgetragen ist.

4. Datenträger nach einem der vorstehenden Ansprüche, **dadurch gekennzeichnet, dass** die thermoreversible transparente Folie (1) auf einer oder beiden Seiten der Karte (K) vollflächig auf die Druckschicht (6) aufgebracht ist.

5. Datenträger nach einem der vorstehenden Ansprüche, **dadurch gekennzeichnet, dass** die thermoreversible Schicht mit dem Thermodruckkopf bei einer ersten Temperatur beschreibbar ist und die Daten und/oder Bilder bei einer zweiten höheren Temperatur durch Übergang in den transparenten Zustand löschbar sind.

6. Datenträger nach einem der Ansprüche 1 bis 4, **dadurch gekennzeichnet, dass** die thermoreversible Schicht mit dem Thermodruckkopf bei der gleichen Temperatur beschreibbar und löschbar ist, wobei die Abkühlzeit zum Löschen größer als beim Beschreiben ist.

7. Datenträger nach einem der vorstehenden Ansprüche, **dadurch gekennzeichnet, dass** die Druckschicht (6) zumindest im Bereich der auf die thermoreversible Folie (1) aufgetragenen Daten und/oder Bilder einen dazu kontrastierenden Hintergrund aufweist.

8. Datenträger nach einem der vorstehenden Ansprüche, **dadurch gekennzeichnet, dass** die Druckschicht (6) mit Sicherheitsmerkmalen (9) versehen ist.

9. Datenträger nach Anspruch 8, **dadurch gekennzeichnet, dass** die Sicherheitsmerkmale (9) im Bereich der auf die thermoreversible Folie (1) aufgezeichneten Daten und/oder Bilder vorgesehen sind.

10. Datenträger nach einem der vorstehenden Ansprüche, **dadurch gekennzeichnet, dass** er als kontaktlose Chipkarte ausgebildet ist.

11. Verfahren zur Herstellung des Datenträgers nach einem der vorstehenden Ansprüche, **dadurch gekennzeichnet, dass** die thermoreversible Folie (1) durch Heißlaminieren auf die Trägerschicht (2) aufgebracht wird.

12. Verfahren nach Anspruch 11 zur Herstellung der kontaktlosen Chipkarte nach Anspruch 7, **dadurch gekennzeichnet, dass** das Chipmodul und die Antennenspule der Chipkarte in einer Innenschicht (14) angeordnet werden und die Innenschicht (14) auf beiden Seiten mit Deckschichten (2) laminiert wird, wobei wenigstens eine der beiden Deckschichten (2) eine Trägerschicht bildet, die mit der Druckschicht (6) und der thermoreversiblen Folie (1) versehen ist.

13. Verfahren nach Anspruch 12, **dadurch gekennzeichnet, dass** das Chipmodul und die Antennenspule in einer Kunststoffmasse (16) eingebettet sind und die Deckschichten (2, 17) durch Kaltlaminieren mit der Kunststoffmasse (16) der Innenschicht (14) verbunden werden.

## Claims

1. A card-shaped data carrier with a thermoreversible layer which is writable with a thermal printhead in visible color with data and/or pictures which are erasable through transition to a transparent state, and with a printed layer with permanent data and/or pictures, **characterized in that** the printed layer (6) is applied between a carrier layer (2) and the thermoreversible layer formed as a transparent film (1).

2. A data carrier according to claim 1, **characterized in that** the thermoreversible transparent film (1) has a thermoreversible color layer (4) on a transparent carrier film (3) and a protective layer (5) on the thermoreversible color layer (4).

3. A data carrier according to claim 1 or 2, **characterized in that** the printed layer (6) is applied all-over to one or both sides of the card (*K*).

4. A data carrier according to any of the above claims, **characterized in that** the thermoreversible transparent film (1) is applied all-over to the printed layer (6) on one or both sides of the card (*K*).

5. A data carrier according to any of the above claims, **characterized in that** the thermoreversible layer is writable with the thermal printhead at a first temperature and the data and/or pictures are erasable at a second higher temperature through transition to the transparent state.

6. A data carrier according to any of claims 1 to 4, **characterized in that** the thermoreversible layer is writable and erasable with the thermal printhead at the same temperature, the cooling time being greater for writing than for erasing.

7. A data carrier according to any of the above claims, **characterized in that** at least in the area of the data and/or pictures applied to the thermoreversible film (1) the printed layer (6) has a background contrasting therewith.

8. A data carrier according to any of the above claims, **characterized in that** the printed layer (6) is provided with security features (9).

9. A data carrier according to claim 8, **characterized in that** the security features (9) are provided in the area of the data and/or pictures recorded on the thermoreversible film (1).

10. A data carrier according to any of the above claims, **characterized in that** it is designed as a contactless smart card.

11. A method for producing the data carrier according to any of the above claims, **characterized in that** the thermoreversible film (1) is applied to the carrier layer (2) by hot lamination.

12. A method according to claim 11 for producing the contactless smart card according to claim 7, **characterized in that** the chip module and the antenna coil of the smart card are disposed in an inside layer (14) and the inside layer (14) is laminated with cover layers (2) on both sides, at least one of the two cover layers (2) forming a carrier layer which is provided with the printed layer (6) and the thermoreversible film (1).

13. A method according to claim 12, **characterized in that** the chip module and the antenna coil are embedded in a plastic material (16) and the cover layers (2, 17) are connected with the plastic material (16) of the inside layer (14) by cold lamination.

## Revendications

1. Support de données en forme de carte comportant une couche thermoréversible sur laquelle on peut écrire avec une encre visible, au moyen d'une tête d'imprimante thermique, des données et/ou images qui peuvent être effacées par le passage dans un état transparent, et une couche d'impression avec des données et/ou images permanentes, **caractérisé en ce que** la couche d'impression (6) est appliquée entre une couche support (2) et une couche thermoréversible réalisée sous forme de feuille (1) transparente.

2. Support de données selon la revendication 1, **caractérisé en ce que** la feuille (1) transparente thermoréversible présente une couche d'encre (4) thermoréversible sur une feuille support (3) transparente et une couche de protection (5) sur la couche d'encre (4) thermoréversible.

3. Support de données selon la revendication 1 ou 2, **caractérisé en ce que** la couche d'impression (6) est déposée sur toute la surface d'une ou des deux faces de la carte (K).

4. Support de données selon l'une quelconque des revendications précédentes, **caractérisé en ce que** la feuille (1) transparente thermoréversible est appliquée sur la couche d'impression (6), sur toute la surface d'une ou des deux faces de la carte (K).

5. Support de données selon l'une quelconque des revendications précédentes, **caractérisé en ce qu'**on peut écrire sur la couche thermoréversible au moyen de la tête d'imprimante thermique à une première température et **en ce que** les données et/ou images peuvent être effacées à une deuxième température plus élevée, par le passage dans l'état transparent.

6. Support de données selon l'une quelconque des revendications 1 à 4, **caractérisé en ce qu'**on peut écrire sur la couche thermoréversible et effacer celle-ci avec la tête d'imprimante thermique à la même température, le temps de refroidissement pour l'effacement étant plus long que pour l'écriture.

7. Support de données selon l'une quelconque des revendications précédentes, **caractérisé en ce que** la couche d'impression (6) présente, au moins dans la région des données et/ou images déposées sur la feuille (1) thermoréversible, un fond en contraste avec celles-ci.

8. Support de données selon l'une quelconque des revendications précédentes, **caractérisé en ce que** la couche d'impression (6) est pourvue de caractères de sécurité (9).

9. Support de données selon la revendication 8, **caractérisé en ce que** les caractères de sécurité (9) sont prévus dans la région des données et/ou images enregistrées sur la feuille (1) thermoréversible.

10. Support de données selon l'une quelconque des revendications précédentes, **caractérisé en ce qu'**il est réalisé sous forme de carte à puce sans contact.

11. Procédé de fabrication du support de données selon l'une quelconque des revendications précédentes, **caractérisé en ce que** la feuille (1) thermoréversible est appliquée sur la couche support (2) par laminage à chaud.

12. Procédé selon la revendication 11 pour la fabrication de la carte à puce sans contact selon la revendication 7, **caractérisé en ce que** le module de puce et la bobine-antenne de la carte à puce sont agencés dans une couche intérieure (14) et **en ce que** la couche intérieure (14) est laminée sur les deux faces avec des couches de recouvrement (2), au moins une des couches de recouvrement (2) formant une couche support qui est pourvue de la couche d'impression (6) et la feuille (1) thermoréversible.

13. Procédé selon la revendication 12, **caractérisé en ce que** le module de puce et la bobine-antenne sont noyés dans une masse de matière plastique (16) et **en ce que** les couches de recouvrement (2, 17) sont reliées par laminage à froid avec la masse en matière plastique (16) de la couche intérieure (14).
